# EUROPEAN PATENT APPLICATION

(11) **EP 2 607 426 A1**
(43) Date of publication of application: **26.06.2013**
(21) Application number: 11194369.2
(22) Date of filing: 19.12.2011
(51) Int. Cl.: C08L 67/00, C09D 17/00

(54) **Additive concentrate for polymers**

(71) Applicant: Holland Colours N. V., 7323 RW Apeldoorn (NL)
(72) Inventor: Roelofs, Jules Caspar Albert Anton, 7323 RW Apeldoorn (NL); Horstman, Henri Jacob, 7323 RW Apeldoorn (NL)
(74) Representative: Jansen, Cornelis Marinus

(57) **Abstract**

The invention is directed to a colour concentrate, comprising
40 - 95 wt.% of particulate organic or inorganic pigment and/or dye
- 4.9 - 60 wt.% of liquid organic carrier material, based on cycloalkyl iso-nonylesters, and
- 0.1 -5 wt.% of dispersant.

## Description

The invention is directed to a concentrate of a pigment and/or dye, suitable for introducing the pigment and/or dye into a polymer or a polymer blend by melt blending.

If a colour has to be introduced in a plastic or polymer article, it is conventionally performed by mixing colourants like dyes or pigments with the polymeric resin, usually in granule or powder form charged to the hopper of an extruder or injection molding machine used to produce the desired plastic article. This article could be a bottle preform, pipe, box, bottle, fibre, film or sheet, but is not limited to that. The same applies to additives that have to be introduced in a plastic material.

For the purpose of adding additives, the additive, such as pigment or mixture of pigments, can be added as a solid concentrate or in powder form or as a dispersion in a liquid carrier. Such a liquid carrier is generally an inert material comprising materials like hydrocarbon oils, edible oils, esters, alcohols, or a mixture of two or more thereof.

Any such carrier must be selected so as to have good compatibility with the plastic. In addition, if the moulding composition is to be used for manufacture of food packages, the carrier must be non-toxic. In case of a not good compatibility , migration of the carrier out of the resin can cause problems like off taste via migration, haze (esp. in polyester applications), delamination or mechanical failure.

Also the addition itself of the liquid concentrate should be carefully monitored; the viscosity and stability of the concentrate should be stable to prevent a colour shift during production.

In general, the amount of carrier used should desirably be kept to a minimum so as not to affect adversely the properties of the plastic article. It is known to the person skilled in the art that depending on the polymer, usually a specific carrier has to be used. A carrier suitable for polyesters usually has different requirements than a carrier suitable for polyolefins or styrene polymers.

There is a need for concentrates that posses the above advantageous properties, more in particular that are generally applicable in a wide range of polymers, that are stable under the usual processing conditions and that do not adversely affect the polymer properties, as well as the properties of the resultant product.

Surprisingly, we have found that cycloalkyl iso-nonylesters can be used as carrier for colorants and additives for the use in various plastics and applications thereof. These carriers show a superior performance even at very high addition levels. Also the variety of different polymers which can be used is surprising. These polymer and polymer blends include polyesters such as PET, PEN, PBT, polycarbonate, polylactide, but also ethylene polymers, propylene polymers and styrene polymers.

Accordingly the invention is in a first embodiment directed to a colour concentrate, comprising
40 - 95 wt.% of particulate organic or inorganic pigment and/or dye
   - 4.9 - 60 wt.% of liquid organic carrier material, based on cycloalkyl iso-nonylesters, and
   - 0.1 - 5 wt.% of dispersant.

In a further embodiment the invention is directed to the use of such a concentrate for introducing an additive or a colourant in a polymer or polymer blend by melt blending the concentrate with a melt of a polymer of polymer blend.

In a third embodiment the invention is directed to a process for producing a polyester material comprising adding a concentrate according to the invention to a melt of a polyester, melt blending the concentrate and the polyester and shaping the blend thus obtained to a.o. a preform, bottle, fibre, film or sheet.

In a fourth embodiment, the invention is directed to a polyester composition, further containing the colour concentrate of the invention.

The cycloalkyl-isononyl ester is preferably diisononyl-1,2-cyclohexanedicarboxylate. A further essential component of the concentrate is the dispersant. Although various dispersants that are compatible with the other components of the concentrate may be used, it is preferred to use a dispersant based on at least one hydroxy carboxylic acid, more in particular a hydroxyl carboxylic having the formula HO-X-COOH, wherein X is a divalent unsaturated or saturated radical having at least 6 carbon atoms, preferable between 6 and 18 carbon atoms. Suitable dispersants are reaction products of such hydroxyl carboxylic acids with each other and/or with stearic acid, glycerol or polyethylene-imine. Examples of such dispersants are poly(12-hydroxystearic acid), poly(12-hydroxystearic acid)stearate and poly(12-hydroxystearic acid)-polyethyleneimine copolymer.

As indicated above, the invention is based on the use of cycloalkyl-isononylesters as liquid carrier for particulate, solid colourants (dyes and pigments) for polymers. As colourants, the various colourants known for colouring polymers, more in particular for colouring polyester, can be used.

Colourants that may be used, are inorganic and organic compounds, namely pigments, dyes, including carbon black. Examples of colourants are titanium oxide, zinc oxide, zinc sulfide, barium sulphate, iron oxide, mixed metal iron oxide, aluminium powder, graphite or combinations thereof.

The present invention has been found to be especially suitable for colouring preforms for polyester bottles. In addition to the pigment or dye, the colour concentrate may contain further polymer additives, such as a strengthening agent, a UV absorber, AA scavenger, oxygen scavenger, antislip agent, antistatic agent.

The composition of the concentrate, i.e. the amount of cycloalkyl-isononylester ester and pigment or dye, may vary strongly, dependent on the actual use, and materials. The amount of liquid carrier material in the said concentrate is between 4.9 and 60 wt.%, more preferably between 5 and 75 wt.% the balance being the pigment and/or dye, as well as possible further additives.

The concentrate has the advantage that it can be introduced into the polymer or polymer blend easily, while at the same time introducing very low amounts of carrier material (the isononyl ester). The final product has a low haze value when used in transparent bottle applications, causes little or no taste changes and is non-toxic, which makes it very suitable for the use in food contact applications.

The concentrate is introduced into the polymer or polymer blend at some stage during the processing thereof. It is preferred to introduce the concentrate during the melt processing/blending of the polymeric material, for example in the blender or extruder. The level of concentrate to be used in the polymeric material is dependent on the various compositions, the additive concentration in the concentrate, the amount of additive/colourant, required in the polymer and the like.

The temperature at which the concentrate can be processed is relatively flexible. As indicated above, the material is very stable at all varying temperatures. This means that there is generally no need to deviate from the normal processing temperature of the polymer that is used.

The concentrate can be used to add additives to polymers for all kinds of applications, such as in injection moulding of PET preforms, but not limited to this. Also colouring of polyester sheet, fibres, and the like are possible. More in general, the concentrate may be used in combination with polyesters such as PET, PEN, PBT, polycarbonate, polylactide, ethylene polymers, propylene polymers and styrene polymers.

Suitable applications for the final product prepared when using the concentrate can be found in the food industry, such as containers for dairy products, water bottles, etc.

The concentrate can simply be prepared by mixing (milling) of the components in suitable equipment, such as a mixing tank equipped with a suitable dissolver blade and/or bead mill.

The invention is now elucidated on the basis of some, non-limiting examples.

### EXAMPLE:

Various carrier materials were tested in combination with poly(12-hydroxystearic acid) as dispersant. The results are given in the table, which clearly shows that the isononyl ester gives a surprisingly low and useful viscosity, even at 80% titanium dioxide loadings. It is clear that some of the carrier materials cannot even obtain an 80% loading at all.

| **poly(12-hydroxystearic acid) stearate (wt%)** | | | | | | |
|---|---|---|---|---|---|---|
| | **Carrier material** | **TiO2 (wt%)** | **Brookfield** | **Viscosity** | **(mPa*s)** | **remark** |
| | | | 5 rpm | 10 rpm | 20 rpm | |
| 1,0 | rapeseed oil triglycerol ester | 80 | 22800 | 18100 | 14950 | |
| 0,8 | 1,2-Cyclohexane dicarboxylic acid,di-isononyl ester | 80 | 16800 | 13100 | 10500 | |
| 0,9 | white mineral oil | 74 | 120000 | 73000 | E | S |
| 1,6 | Acetyltributyl Citrate | 63 | E | E | E | S |
| 2,1 | Polyethyleneglycol-400 | 44 | 60000 | 34400 | 20050 | S |
| 0,8 | Glycerol triheptanoate | 80 | 32000 | 21700 | 14950 | |
| 0,9 | trimethylolpropane trioleate | 80 | 28000 | 21600 | 17400 | |
| 0,8 | Diisononyl phthalate | 80 | 24400 | 19200 | 15600 | |
| 1,1 | Castor oil | 63 | 95000 | 58600 | 34500 | S |

| | | | | | | |
|---|---|---|---|---|---|---|
| E= Error, outside viscosity range for Spindle 6 S= to high viscosity, TiO2 addition was stopped | | | | | | |

## Claims

1. Colour concentrate, comprising
40 - 95 wt.% of particulate organic or inorganic pigment and/or dye
- 4.9 - 60 wt.% of liquid organic carrier material, based on cycloalkyl iso-nonylesters, and
- 0.1 -5 wt.% of dispersant.

2. Colour concentrate according to claim 1, wherein the liquid organic carrier material is diisononyl-1,2-cyclohexanedicarboxylate.

3. Colour concentrate according to claim 1 or 2, wherein the dispersant is based on at least one hydroxy carboxylic acid.

4. Colour concentrate according to claim 3, wherein the hydroxyl carboxylic has the formula HO-X-COOH, wherein X is a divalent unsaturated or saturated radical having at least 6 carbon atoms, preferable between 6 and 18 carbon atoms.

5. Colour concentrate according to claim 3 or 4, wherein the dispersant is selected from the group of poly(12-hydroxystearic acid), poly(12-hydroxystearic acid) stearate and poly(12-hydroxystearic acid)-polyethyleneimine copolymer.

6. Colour concentrate according to claim 1-5, wherein the pigment is a dye or carbon black.

7. Colour concentrate according to claim 1-5, wherein the pigment is titanium dioxide, zinc oxide, zinc sulfide, barium sulphate, iron oxide, mixed metal iron oxide, aluminium powder, graphite or combinations thereof.

8. Colour concentrate according to claim 1-7, wherein the amount of pigment or dye is between 65 and 90 wt.% based on the weight of the concentrate.

9. Colour concentrate according to claim 1 - 8, further containing up to 10 wt.% of additives.

10. Colour concentrate according to claim 9, wherein the additives have been selected from strengthening agents, UV absorbers, AA scavengers, oxygen scavengers, antislip agents and antistatic agents.

11. Use of the colour concentrate according to claim 1-10, for introducing an pigment and/or dye in a polymer or polymer blend.

12. Use according to claim 11, wherein the polymer or polymer blend is selected from the group of polyesters, propylene polymers, ethylene polymers, styrene polymers, polycarbonate and blends thereof.

13. Use according to claim 12, wherein the polyester is selected from polyethylene therephtalate, and poly butylene therephtalate.

14. Process for producing a polyester material comprising adding a concentrate according to claim 1-10 to a melt of a polyester, melt blending the concentrate and the polyester and shaping the blend thus obtained to a preform, bottle, fibre, film or sheet.

15. Polyester composition, more in particular PET or PBT, containing the colour concentrate of claim 1 - 10 in an amount of between 0.5 and 15 wt.%.
